(19) Europäisches Patentamt
European Patent Office
Office européen des brevets

(11) EP 1 776 625 B1

(12) # FASCICULE DE BREVET EUROPEEN

(45) Date de publication et mention de la délivrance du brevet:
**05.12.2007 Bulletin 2007/49**

(21) Numéro de dépôt: **05793258.4**

(22) Date de dépôt: **27.07.2005**

(51) Int Cl.:
***G05D 1/06*** *(2006.01)*

(86) Numéro de dépôt international:
**PCT/FR2005/001950**

(87) Numéro de publication internationale:
**WO 2006/024745 (09.03.2006 Gazette 2006/10)**

(54) **SYSTEME DE COMMANDES DE VOL ELECTRIQUES POUR LES GOUVERNES DE PROFONDEUR D'UN AERONEF**

ELEKTRISCHER FLUGREGLER FÜR FLUGZEUGHÖHENRUDER

ELECTRIC FLIGHT CONTROL SYSTEM FOR AIRCRAFT ELEVATORS

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **13.08.2004 FR 0408862**

(43) Date de publication de la demande:
**25.04.2007 Bulletin 2007/17**

(73) Titulaire: **AIRBUS France**
**31060 Toulouse (FR)**

(72) Inventeurs:
- **LAVERGNE, Fabien**
**F-31300 TOULOUSE (FR)**
- **VILLAUME, Fabrice**
**F-31000 TOULOUSE (FR)**

(74) Mandataire: **Bonnetat, Christian**
**CABINET BONNETAT**
**29, rue de St. Pétersbourg**
**75008 Paris (FR)**

(56) Documents cités:
**EP-A- 0 867 362**
**FR-A- 2 656 585**
**FR-A- 2 664 231**
**FR-A- 2 668 750**
**US-A- 4 373 184**
**US-A- 4 580 210**
**US-A- 5 016 177**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 1 776 625 B1

Printed by Jouve, 75001 PARIS (FR)

## Description

La présente invention concerne un système de commandes de vol électriques pour la commande des gouvernes de profondeur d'un aéronef.

On sait que, dans les avions à commandes mécaniques, le manche commande directement un angle de braquage des gouvernes de profondeur, l'amplitude de cet angle étant proportionnel au basculement dudit manche. Ainsi, en agissant sur ledit manche, le pilote exerce une action de pilotage positionnant momentanément l'avion autour de son centre de gravité ou contrôlant l'attitude dudit avion. Une telle action de pilotage est instinctive pour le pilote.

Des commandes de vol électriques comprenant des moyens pour diminuer les efforts appliqués à la voilure sont connues. Les documents FR 2 656 585 et FR 2 668 750 en divulguent des exemples.

On sait également que les commandes de vol électriques, dont sont maintenant équipés de nombreux avions modernes, permettent de commander un avion par objectif, c'est-à-dire de commander directement un paramètre, tel que le facteur de charge, par l'intermédiaire dudit manche, tout se passant comme si celui-ci était gradué en facteur de charge. Une telle commande est avantageuse car, en graduant le manche en facteur de charge et en limitant la plage de facteur de charge commandable, on est sûr de conserver l'intégrité de l'avion dans n'importe quelle manoeuvre.

En revanche, la commande en facteur de charge n'est pas très instinctive pour le pilote, car la commande en facteur de charge permet plutôt de guider l'avion à long terme que de le piloter dans l'instant. En effet, commander un facteur de charge nul revient à imposer une pente aérodynamique constante. Grâce au manche, on peut ainsi guider l'avion en contrôlant sa trajectoire, ce qui permet aisément d'utiliser lesdites commandes de vol électriques soit avec un pilote humain, soit avec un pilote automatique.

Cependant, il résulte de ce qui précède que, dans des phases de vol très dynamiques, par exemple à proximité du sol, pendant lesquelles les tâches de commande sont à très court terme, on est obligé de substituer à ladite commande en facteur de charge, une commande en vitesse de tangage, par exemple.

Par ailleurs, les commandes électriques en facteur de charge connues ne peuvent intégrer une protection de l'avion en assiette longitudinale. Il est donc nécessaire d'y adjoindre une loi de protection en assiette supplémentaire et d'interfacer avec précision celle-ci avec la commande de vol électrique en facteur de charge, afin d'éviter des problèmes à proximité du sol, comme le toucher de queue (tail-strike).

De plus, il est également impossible de protéger l'avion en incidence par les seules commandes électriques en facteur de charge. Il faut donc, là encore, rajouter une loi de protection en incidence supplémentaire et procéder à un interfaçage délicat pour éviter les risques de décrochage de l'avion lors des manoeuvres usuelles.

La présente invention a pour objet de remédier à ces inconvénients et elle concerne des commandes de vol électriques permettant de commander l'aéronef en facteur de charge dans certaines conditions de vol et en vitesse de tangage dans d'autres et intégrant des protections en facteur de charge, en incidence et en assiette longitudinale.

A cette fin, selon l'invention, le système de commandes de vol électriques pour la commande en facteur de charge des gouvernes de profondeur d'un aéronef, lesdites gouvernes de profondeur étant commandées par des moyens de commande imposant auxdites gouvernes de profondeur de prendre une position de braquage fonction d'un signal électrique $\delta_{mc}$ représentatif de la valeur commandée de l'angle de braquage $\delta_m$ desdites gouvernes de profondeur, est remarquable en ce qu'il comporte :

- des premiers moyens de calcul pour calculer, à partir d'un signal électrique nzc représentatif d'une valeur commandée dudit facteur de charge, un premier signal électrique $\dot{\gamma}_c$, représentatif de la valeur commandée de la dérivée, par rapport au temps, de la pente aérodynamique $\gamma$ dudit aéronef ;
- un premier dispositif constitutif, qui :
    - est apte à recevoir à son entrée ledit premier signal électrique $\dot{\gamma}_c$ ;
    - comporte des premiers moyens de protection aptes à maintenir ledit premier signal électrique $\dot{\gamma}_c$ entre une valeur minimale et une valeur maximale ;
    - à partir dudit premier signal électrique $\dot{\gamma}_c$, détermine au moins un deuxième signal électrique $\alpha_c$, représentatif de la valeur commandée correspondante de l'incidence $\alpha$, et un troisième signal électrique $\theta_c$, représentatif de la valeur commandée correspondante de l'assiette longitudinale $\theta$ ;
    - comporte des deuxièmes moyens de protection aptes à maintenir ledit deuxième signal électrique $\alpha_c$ entre une valeur minimale et une valeur maximale ; et
    - délivre au moins ledit troisième signal électrique $\theta_c$ à sa sortie ; et
- un second dispositif constitutif, qui :
    - est apte à recevoir à son entrée au moins ledit troisième signal électrique $\theta_c$ ou un quatrième signal électrique $\theta_d$ semblable audit troisième signal électrique $\theta_c$;

- comporte des troisièmes moyens de protection aptes à maintenir ledit troisième ou quatrième signal électrique entre une valeur minimale et une valeur maximale ; et
- est apte à délivrer à sa sortie un cinquième signal électrique qui constitue ledit signal $\delta_{mc}$, représentatif de la valeur commandée correspondante de l'angle de braquage $\delta_m$ desdites gouvernes de profondeur.

Avantageusement, le système conforme à l'invention comporte des premiers moyens de commutation pouvant prendre :

- soit une première position pour laquelle la sortie dudit premier dispositif constitutif est reliée à l'entrée dudit second dispositif, de sorte que ledit troisième signal électrique $\theta_c$ est alors transmis audit second dispositif constitutif ;
- soit une seconde position pour laquelle l'entrée dudit second dispositif reçoit ledit quatrième signal électrique $\theta_d$, semblable audit troisième signal électrique $\theta_c$ et engendré à partir d'un sixième signal électrique $q_d$, représentatif d'une valeur désirée pour la vitesse de tangage q.

On remarque que, de façon connue, le facteur de charge nz est égal à $V.\dot{\gamma}/g$ expression dans laquelle V est la vitesse de l'aéronef, g l'accélération de la pesanteur et $\dot{\gamma}$ la dérivée de la pente aérodynamique. Il est donc aisé de transformer le signal $nz_c$ de facteur de charge commandé dans ledit premier signal électrique $\dot{\gamma}_c$, puisqu'alors $\dot{\gamma}_c$ est égal à $nz_c.g/V$.

De préférence, ledit premier dispositif constitutif détermine, en plus dudit deuxième signal électrique $\alpha_c$ et dudit troisième signal électrique $\theta_c$ un septième signal électrique $q_c$, représentatif de la valeur commandée correspondante de la vitesse de tangage q, et lesdits premiers moyens de commutation sont aptes à transmettre ledit septième signal électrique $q_c$ audit second dispositif constitutif.

Par simplification, ledit premier dispositif constitutif délivre, pour le septième signal électrique $q_c$, une valeur approximative égale à celle dudit premier signal électrique $\dot{\gamma}_c$.

Dans un mode de réalisation avantageux du système de commandes de vol électriques conforme à la présente invention, ledit système comporte :

- un pilote automatique apte à délivrer un signal de facteur de charge commandé $nz_c$;
- un organe de pilotage manuel apte à délivrer, par commutation, soit un signal de facteur de charge commandé $nz_c$, soit ledit sixième signal électrique $q_d$, représentatif d'une valeur désirée pour la vitesse de tangage q ; et
- des seconds moyens de commutation pour :
  - ■ transmettre audit premier dispositif constitutif soit le signal de facteur de charge commandé délivré par ledit pilote automatique, soit le signal de facteur de charge commandé délivré par ledit organe de pilotage manuel ;
  - ■ ou bien transmettre ledit sixième signal électrique $q_d$ à des premiers moyens d'intégration aptes à former le quatrième signal électrique $\theta_d$, représentatif d'une valeur désirée pour l'assiette $\theta$,

lesdits premiers moyens de commutation étant aptes à transmettre audit second dispositif constitutif lesdits quatrième et sixième signaux électriques $\theta_d$ et $q_d$, en lieu et place desdits troisième et septième signaux électriques $\theta_c$ et $q_c$ engendrés par ledit premier dispositif constitutif.

De préférence, pour déterminer ledit deuxième signal électrique $\alpha_c$ à partir du premier signal $\dot{\gamma}_c$, ledit premier dispositif constitutif comporte des deuxièmes moyens de calcul calculant l'expression

$$\alpha_c = \left(\dot{\gamma}_c - F_\gamma\right) / G_\gamma$$

dans laquelle $F_\gamma$ et $G_\gamma$ sont des fonctions de l'état de l'aéronef avec

$$F_\gamma = \frac{g.\cos(\gamma)}{V} + \frac{1}{2}.\frac{\rho}{m}.V.S.Cz_{\alpha=0}$$

et

$$G_\gamma = \frac{1}{2}.\frac{\rho}{m}.V.S.\frac{\partial Cz}{\partial \alpha}\bigg|_{\alpha=0} + \frac{T}{m.V}$$

où g est l'accélération de la pesanteur, $\gamma$ la pente aérodynamique, V la vitesse de l'aéronef, $\rho$ la masse volumique de l'air, m la masse de l'aéronef, S la surface de référence de l'aéronef, $Cz_{\alpha=0}$ le coefficient de portance de l'aéronef pour une incidence nulle, $\frac{\partial Cz}{\partial \alpha}\Big|_{\alpha=0}$ le gradient du coefficient aérodynamique de portance en fonction de l'incidence et T la poussée de l'aéronef.

Pour former ledit troisième signal électrique $\theta_c$, ledit premier dispositif constitutif peut comporter des seconds moyens intégrateurs aptes à intégrer ledit septième signal électrique $q_c$ et un premier sommateur pour former la somme de l'intégrale délivrée par lesdits seconds moyens intégrateurs et dudit deuxième signal électrique $\alpha_c$.

Avantageusement, ledit second dispositif constitutif, soit à partir dudit troisième signal électrique $\theta_c$ et du septième signal électrique $q_c$ provenant dudit premier dispositif constitutif, soit à partir dudit quatrième signal $\theta_d$ et dudit septième signal $q_d$ provenant dudit organe de pilotage manuel, ainsi que des valeurs actuelles $q_r$ et $\theta_r$ de la vitesse de tangage q et de l'assiette longitudinal $\theta$, détermine un huitième signal électrique $\dot{q}_c$, représentatif de la valeur commandée correspondante de l'accélération de tangage $\dot{q}$, puis, à partir du huitième signal électrique $\dot{q}_c$, ledit second dispositif constitutif détermine ledit cinquième signal électrique $\delta_{mc}$.

De préférence, ledit second dispositif constitutif calcule ledit huitième signal électrique $\dot{q}_c$ par la relation

$$\dot{q}_c = K1.\theta_v - K2.\theta_r + K3.q_v - K4.q_r$$

où $\theta_v$ est ledit troisième ou quatrième signal électrique, $\theta_r$ la valeur actuelle de l'assiette longitudinale $\theta$, $q_v$ ledit sixième ou septième signal électrique, $q_r$ la valeur actuelle de la vitesse de tangage q, K1, K2, K3 et K4 étant des coefficients constants. De plus, pour déterminer ledit cinquième signal électrique $\delta_{mc}$ à partir dudit huitième signal électrique $\dot{q}_c$, ledit second dispositif constitutif comporte avantageusement des troisièmes moyens de calcul calculant l'expression

$$\delta_{mc} = \left(\dot{q}_c - F_q\right) / G_q$$

dans laquelle $F_q$ et $G_q$ sont des fonctions de l'état de l'aéronef avec

$$F_q = \frac{1}{I_y}.\frac{1}{2}.\rho.V^2.S.\ell.Cm_{\delta m=0} + \frac{1}{I_y}.T.b.\cos(\tau)$$

et

$$G_q = \frac{1}{I_y}.\frac{1}{2}.\rho.V^2.S.\ell.\frac{\partial Cm}{\partial \delta m}\bigg|_{\delta m=0}$$

où $I_y$ est l'inertie de tangage, $\rho$ la masse volumique de l'air, V la vitesse de l'aéronef, S la surface de référence de l'aéronef, $\ell$ la longueur de référence de l'aéronef, $Cm_{\delta m=0}$ le coefficient de tangage, T la poussée, b le bras de levier des moteurs, $\tau$ l'angle de calage longitudinal des moteurs et $\frac{\partial Cm}{\partial \delta m}\Big|_{\delta m=0}$ l'efficacité des gouvernes de profondeur.

Les figures du dessin annexé feront bien comprendre comment l'invention peut être réalisée. Sur ces figures,

des références identiques désignent des éléments semblables.

La figure 1 est le schéma synoptique d'un exemple de réalisation du système de commandes de vol électriques conforme à la présente invention.
La figure 2 montre le schéma d'un dispositif d'intégration utilisé dans le système de la figure 1,
La figure 3 est le schéma synoptique du premier dispositif constitutif du système de la figure 1.
La figure 4 illustre la courbe de gain d'un dispositif de la figure 3.
La figure 5 est le schéma synoptique du second dispositif constitutif du système de la figure 1.
Les figures 6 et 7 sont des schémas illustrant la nature des moyens de calcul du second dispositif constitutif calculant le huitième signal électrique $\dot{q}_c$.

Dans l'exemple de réalisation schématique du système de commandes de vol électriques pour aéronef, conforme à la présente invention et montré sur la figure 1, on a représenté un pilote automatique 1, un système de manche 2, des gouvernes de direction 3 et un dispositif 4 de commande du braquage desdites gouvernes.

Dans cet exemple, on a supposé que le pilote automatique 1 était apte à émettre, sur sa borne de sortie 7, un signal de commande électrique $nz_c$ correspondant à une valeur commandée de facteur de charge, alors que le système de manche 2 était apte à engendrer, sur sa borne de sortie 24, un signal de commande électrique correspondant, par commutation, soit à une valeur désirée $q_d$ de vitesse de tangage, soit à une valeur commandée $nz_c$ de facteur de charge. De plus, on prévoit, d'une part, des moyens de calcul 5 aptes à calculer, à partir de la valeur commandée $nz_c$, un signal électrique $\dot{\gamma}_c$, représentatif d'une valeur commandée de la dérivée, par rapport au temps, de la pente aérodynamique $\gamma$ et, d'autre part, des moyens d'intégration 6, aptes à engendrer, à partir de ladite valeur désirée $q_d$, un signal électrique $\theta_d$, représentatif d'une valeur désirée d'assiette longitudinale $\theta$ .

Les moyens de calcul 5 mettent à profit la relation

$$nz = V.\dot{\gamma} / g$$

liant le facteur de charge nz et la dérivée $\dot{\gamma}$ de la pente aérodynamique $\gamma$, V étant la vitesse de l'aéronef et g l'accélération de la pesanteur. Ainsi, les moyens de calcul 5, à qui on adresse la vitesse V et l'accélération de la pesanteur g et qui reçoivent la valeur commandée $nz_c$, déterminent la grandeur $\dot{\gamma}_c$ par l'expression

$$\dot{\gamma}_c = nz_c.g / V$$

Quant à eux, les moyens d'intégration 6 comportent une borne d'entrée 8 et deux bornes de sortie 9 et 10. Entre les bornes 8 et 9 est disposé un intégrateur 11, tandis qu'une liaison 12 relie les bornes 8 et 10 (voir la figure 2). Ainsi, lorsque la valeur désirée $q_d$ de vitesse de tangage est appliquée sur la borne d'entrée 8, on obtient, par intégration par l'intégrateur 11, la valeur désirée d'assiette longitudinale $\theta_d$ sur la borne de sortie 9 et la valeur désirée de vitesse de tangage $q_d$ sur la borne 10.

Ceci étant préalablement décrit, on voit sur la figure 1 que l'exemple de système de commandes de vol électriques selon l'invention , qui y est représenté, comporte :

- un premier dispositif constitutif 13, comportant une borne d'entrée 14, en amont de laquelle sont disposés les moyens de calcul 5, et deux bornes de sortie 15 et 16 ;
- un second dispositif constitutif 17, comportant deux bornes d'entrée 18 et 19 et une borne de sortie 20, cette dernière borne de sortie commandant le dispositif 4 ;
- un commutateur 21, apte à relier la borne d'entrée 27 des moyens de calcul 5, soit à la borne de sortie 7 du pilote automatique 1, soit à une borne 22 ;
- un commutateur 23, apte à relier la borne de sortie 24 du système de manche 2, soit à ladite borne 22, soit à la borne d'entrée 8 des moyens d'intégration 6, ledit commutateur 23 commandant de plus la commutation entre le signal $q_d$ de vitesse de tangage et le signal $nz_c$ à ladite borne de sortie 24 : lorsque le commutateur 23 relie les bornes 24 et 8, le signal de sortie du système de manche 2 est le signal $q_d$ ; inversement, lorsque le commutateur 23 relie les bornes 24 et 22, le signal de sortie du système de manche 2 est le signal $nz_c$;
- un commutateur 25, apte à relier la borne d'entrée 18 du second dispositif 17, soit à la borne de sortie 15 du premier dispositif 13, soit à la borne de sortie 9 des moyens d'intégration 6 ; et
- un commutateur 26, apte à relier la borne d'entrée 19 du second dispositif 17, soit à la borne de sortie 16 du premier

dispositif 13, soit à la borne de sortie 10 des moyens d'intégration 6.

De ce qui précède, on voit donc que :

- lorsque les commutateurs 21, 25 et 26 relient respectivement les bornes 27 et 7, 18 et 15 et 19 et 16, les gouvernes de profondeur 3 sont commandées à partir du pilote automatique 1, par l'intermédiaire des premier et second dispositifs 13 et 17, le paramètre de commande étant la valeur commandée $nz_c$ du facteur de charge ;
- lorsque les commutateurs 21, 23, 25 et 26 relient respectivement les bornes 24 et 22, 22 et 27, 18 et 15 et 19 et 16, les gouvernes de profondeur 3 sont commandées à partir du système de manche 2, par l'intermédiaire des premier et second dispositifs 13 et 17, le paramètre de commande étant la valeur commandée $nz_c$ dudit facteur de charge ; et
- lorsque les commutateurs 23, 25 et 26 relient respectivement les bornes 24 et 8, 18 et 9 et 19 et 10, les gouvernes de profondeur 3 sont commandées à partir du système de manche 2, par l'intermédiaire du seul second dispositif 17, le paramètre de commande étant la vitesse de tangage désirée $q_d$.

Sur la figure 3, on a représenté un exemple de réalisation pour le premier dispositif constitutif 13. Dans cet exemple de réalisation, le premier dispositif 13 comporte :

- un dispositif de protection 30, par exemple du type voteur, recevant le signal $\dot{\gamma}_c$ des moyens de calcul 5 sur la borne 14 et apte à protéger ce signal entre une valeur maximale $\dot{\gamma}_{max}$ et une valeur minimale $\dot{\gamma}_{min}$;
- un calculateur 31 recevant le signal $\dot{\gamma}_c$ du dispositif de protection 30, ainsi qu'une pluralité d'informations 32 et calculant (de la façon décrite ci-après) un signal $\alpha_c$ d'incidence commandée ;
- un dispositif de protection 33, par exemple du type voteur, recevant le signal $\alpha_c$ d'incidence commandée et apte à protéger ce signal entre une valeur maximale $\alpha_{max}$ et une valeur minimale $\alpha_{min}$ ;
- une liaison 34 entre la sortie du dispositif de protection 30 et la borne de sortie 16, ladite liaison 34 comportant un dispositif 35 de gain $K(\alpha)$ variable en fonction de l'incidence $\alpha$ ; on remarquera qu'à la sortie du dispositif de protection 30 apparaît le signal $\dot{\gamma}_c$, qui est égal à la différence entre la vitesse de tangage commandée $q_c$ et la dérivée de l'incidence commandée $\dot{\alpha}_c$ (en effet, $\theta=\alpha+\gamma$). Or, la dérivée de l'incidence commandée $\dot{\alpha}_c$ est généralement très bruitée, de sorte qu'il est préférable de la négliger ; on utilise donc la dérivée de la pente commandée $\dot{\gamma}_c$ pour estimer une valeur approchée de la vitesse de tangage commandée $q_c$. Comme le montre la figure 4, le gain $K(\alpha)$ est toujours égal à 1, sauf au voisinage de $\alpha_{min}$ et de $\alpha_{max}$, où il diminue à 0. On obtient ainsi une protection en incidence ;
- un dispositif 36 de gain $1-K(\alpha)$, recevant l'information de pente aérodynamique actuelle $\gamma_r$ ;
- un sommateur 37 additionnant les signaux de sortie des dispositifs 35 et 36 et en adressant le signal résultant à la borne 16 ; ce signal résultant est donc $\dot{\gamma}_c$, lorsque $\alpha$ est éloigné de $\alpha_{min}$ et de $\alpha_{max}$ et $\gamma_r$ lorsque $\alpha$ est égale à $\alpha_{min}$ ou à $\alpha_{max}$ ;
- un intégrateur 38, intégrant le signal dans la liaison 34 et formant donc une pente commandée $\gamma_c$ ;
- un sommateur 39, additionnant ladite pente commandée $\gamma_c$ donnée par l'intégrateur 38 et l'incidence commandée $\alpha_c$, provenant du dispositif de protection 33 pour obtenir l'assiette commandée $\theta_c$ et l'adresser à la borne 15, éventuellement par l'intermédiaire d'un dispositif de protection en incidence supplémentaire 40, faisant intervenir les valeurs actuelles $\alpha_r$ et $\theta_r$ de l'incidence et de l'assiette.

Le fonctionnement du calculateur 31 est basé sur l'équation de la portance qui s'écrit

$$\dot{\gamma} = F_\gamma + G_\gamma.\alpha$$

expression dans laquelle $F_\gamma$ et $G_\gamma$ sont des fonctions de l'état de l'aéronef avec

$$F_\gamma = \frac{g.\cos(\gamma)}{V} + \frac{1}{2}.\frac{\rho}{m}.V.S.Cz_{\alpha=0}$$

et

$$G_\gamma = \frac{1}{2}.\frac{\rho}{m}.V.S.\frac{\partial Cz}{\partial \alpha}\bigg|_{\alpha=0} + \frac{T}{m.V}$$

ou g est l'accélération de la pesanteur, $\gamma$ la pente aérodynamique, V la vitesse de l'aéronef, $\rho$ la masse volumique de l'air, m la masse de l'aéronef, S la surface de référence de l'aéronef, $Cz_{\alpha=0}$ le coefficient de portance de l'aéronef pour une incidence nulle, $\frac{\partial Cz}{\partial \alpha}\Big|_{\alpha=0}$ le gradient du coefficient aérodynamique de portance en fonction de l'incidence et T la poussée de l'aéronef.

Les informations 32 que reçoit le calculateur 31 sont donc constituées des paramètres g, $\gamma$, V, $\rho$, m, S, $Cz_{\alpha=0}$, $\frac{\partial Cz}{\partial \alpha}\Big|_{\alpha=0}$ et T, disponibles à bord de l'aéronef et permettant de calculer $F_\gamma$ et $G_\gamma$, après quoi, le calculateur 31 calcule $\alpha_c$ par l'expression

$$\alpha_c = (\dot{\gamma}_c - F_\gamma)/G_\gamma$$

Ainsi, sur les bornes 15 et 16 du premier dispositif constitutif 13 apparaissent respectivement l'assiette commandée $\theta_c$ et la vitesse de tangage commandée $q_c$.

Comme cela a été mentionné ci-dessus, le signal $\theta_v$ d'assiette commandée apparaissant sur la borne d'entrée 18 du second dispositif constitutif 17 est formé soit par le signal $\theta_c$, provenant de la borne de sortie 15 du premier dispositif constitutif 13, soit par le signal $\theta_d$, provenant des moyens d'intégration 6.

De même, le signal $q_v$ de vitesse de tangage commandée apparaissant sur la borne d'entrée 19 dudit second dispositif constitutif 17 est formé soit par le signal $q_c$, provenant de la borne de sortie 16 du premier dispositif constitutif 13, soit par le signal $q_d$ provenant des moyens d'intégration 6.

Dans le second dispositif constitutif 17, le signal $\theta_v$ d'assiette longitudinale commandée est adressé à un dispositif de protection 41, par exemple du type voteur, apte à maintenir ce signal entre une valeur minimale $\theta_{min}$ et une valeur maximale $\theta_{max}$. Quand à lui, le signal $q_v$ de vitesse de tangage commandée est adressé à un dispositif de gain 42, dont le gain $K(\theta)$ est toujours égal à 1, sauf quand $\theta$ est voisin de $\theta_{min}$ ou de $\theta_{max}$, valeurs pour lesquelles $K(\theta)$ est égal à zéro (la courbe du gain $K(\theta)$ en fonction de $\theta$ est semblable à celle montrée sur la figure 4 à propos de la variation de $K(\alpha)$ en fonction de $\alpha$).

A partir des valeurs $\theta_v$ (ainsi protégée) et $q_v$ (passée dans le dispositif 42), le dispositif constitutif 17 comporte des moyens pour calculer la dérivée par rapport au temps de $q_v$ représentative de la valeur commandée $q_c$ de l'accélération de tangage. Ces moyens de calcul comportent :

- un dispositif de gain 43, de gain K1, recevant le signal $\theta_v$ du dispositif de protection 41 ;
- un dispositif de gain 44, de gain K2, recevant la valeur actuelle $\theta_r$ de l'assiette longitudinale ;
- un dispositif de gain 45, de gain K3, recevant le signal $q_v$ du dispositif 42 ;
- un dispositif de gain 46, de gain K4, recevant la valeur actuelle $q_r$ de la vitesse de tangage q ;
- un soustracteur 47 pour calculer la différence $K1.\theta_v$ - $K2.\theta_r$ ;
- un soustracteur 48 pour calculer la différence $K3.q_v$ - $K4.q_r$; et
- un additionneur 49 pour faire la somme

$$\dot{q}_c = K1.\theta_v - K2.\theta_r + K3.q_v - K4.q_r$$

On remarquera que, par transformation de Laplace, cette somme s'écrit

$$s^2.\theta_r = K1.\theta_v - K2.\theta_r + K3.s.\theta_v - K4.s.\theta_r$$

expression dans laquelle s est l'opérateur de Laplace, de sorte que

$$\theta_r / \theta_v = (\tau.s + 1).\omega^2 / (s^2 + 2.z.\omega.s + \omega^2)$$

en prenant K1 = K2 = $\omega^2$, K3 = $\tau/\omega^2$ et K4 = 2.z. $\omega$.

Les éléments 43 à 49 se comportent donc comme un filtre du deuxième ordre, de pulsation propre $\omega$ et d'amortissement z, avec une avance de phase du premier ordre de constante de temps égale à $\tau$.

Sur les figures 6 et 7, on a représenté respectivement la réponse indicielle et la réponse en poursuite d'un tel filtre, en fonction du temps t.

Le second dispositif constitutif 17 comporte de plus un calculateur 50 recevant la valeur commandée $\dot{q}_c$ de l'accélération de tangage, élaborée par les éléments 43 à 49, ainsi qu'une pluralité d'informations 51, et calculant le signal $\delta_{mc}$.

Le fonctionnement du calculateur 50 est basé sur le fait que, de façon connue, l'accélération du tangage $\dot{q}$ d'un aéronef est une fonction affine de l'angle de braquage $\delta_m$ des gouvernes de profondeur 3, ce qui s'écrit

$$\dot{q} = F_q + G_q.\delta_m$$

expression dans laquelle

$$F_q = \frac{1}{I_y}.\frac{1}{2}.\rho.V^2.S.\ell.Cm_{\delta m=0} + \frac{1}{I_y}.T.b.\cos(\tau)$$

et

$$G_q = \frac{1}{I_y}.\frac{1}{2}.\rho.V^2.S.\ell.\left.\frac{\partial Cm}{\partial \delta m}\right|_{\delta m=0}$$

où 4 est l'inertie de tangage, $\rho$ la masse volumique de l'air, V la vitesse de l'aéronef, S la surface de référence de l'aéronef, $\ell$ la longueur de référence de l'aéronef, $Cm_{\delta m=0}$ le coefficient de tangage, T la poussée, b le bras de levier des moteurs, $\tau$ l'angle de calage longitudinal des moteurs et $\left.\frac{\partial Cm}{\partial \delta m}\right|_{\delta m=0}$ l'efficacité des gouvernes de profondeur.

Ainsi, les informations 51 comprennent $I_\gamma$, $\rho$, V, S, $\ell$, $Cm_{\delta m=0}$ , T, b, $\tau$ et $\left.\frac{\partial Cm}{\partial \delta m}\right|_{\delta m=0}$ et le calculateur 50 calcule l'expression

$$\delta_{mc} = (\dot{q}_c - F_q) / G_q$$

On voit ainsi que, grâce à la présente invention, on obtient un système de commandes de vol électriques longitudinales avec protections intégrées en facteur de charge, en incidence et en assiette longitudinale, le paramètre

de pilotage pouvant, au choix, être le facteur de charge ou la vitesse de tangage.

## Revendications

**1.** Système de commandes de vol électriques pour la commande en facteur de charge des gouvernes de profondeur (3) d'un aéronef, lesdites gouvernes de profondeur étant commandées par des moyens de commande (4) imposant auxdites gouvernes de profondeur de prendre une position de braquage fonction d'un signal électrique $\delta_{mc}$ représentatif de la valeur commandée de l'angle de braquage $\delta_m$ desdites gouvernes de profondeur (4),
**caractérisé en ce qu'**il comporte :

- des premiers moyens de calcul pour calculer, à partir d'un signal électrique nzc représentatif d'une valeur commandée dudit facteur de charge, un premier signal électrique $\dot{\gamma}_c$, représentatif de la valeur commandée de la dérivée, par rapport au temps, de la pente aérodynamique $\gamma$ dudit aéronef ;
- un premier dispositif constitutif (13), qui :

  . est apte à recevoir à son entrée (14) ledit premier signal électrique $\dot{\gamma}_c$ ;
  . comporte des premiers moyens de protection (30) aptes à maintenir ledit premier signal électrique $\dot{\gamma}_c$ entre une valeur minimale et une valeur maximale ;
  . à partir dudit premier signal électrique $\dot{\gamma}_c$, détermine au moins un deuxième signal électrique $\alpha_c$, représentatif de la valeur commandée correspondante de l'incidence $\alpha$, et un troisième signal électrique $\theta_c$, représentatif de la valeur commandée correspondante de l'assiette longitudinale $\theta$ ;
  . comporte des deuxièmes moyens de protection (33) aptes à maintenir ledit deuxième signal électrique $\alpha_c$ entre une valeur minimale et une valeur maximale ; et
  . délivre au moins ledit troisième signal électrique $\theta_c$ à sa sortie (15) ; et

- un second dispositif constitutif (17), qui :

  . est apte à recevoir à son entrée (18) au moins ledit troisième signal électrique $\theta_c$ ou un quatrième signal électrique $\theta_d$ semblable audit troisième signal électrique $\theta_c$ ;
  . comporte des troisièmes moyens de protection aptes à maintenir ledit troisième ou quatrième signal électrique entre une valeur minimale et une valeur maximale ; et
  . est apte à délivrer à sa sortie (20) un cinquième signal électrique qui constitue ledit signal $\delta_{mc}$, représentatif de la valeur commandée correspondante de l'angle de braquage $\delta_m$ desdites gouvernes de profondeur (4).

**2.** Système selon la revendication 1,
**caractérisé en ce qu'**il comporte des premiers moyens de commutation (25, 26) pouvant prendre :

- soit une première position pour laquelle la sortie dudit premier dispositif constitutif est reliée à l'entrée dudit second dispositif constitutif, de sorte que ledit troisième signal électrique $\theta_c$ est alors transmis audit second dispositif constitutif ;
- soit une seconde position pour laquelle l'entrée dudit second dispositif reçoit ledit quatrième signal électrique $\theta_d$, semblable audit troisième signal électrique $\theta_c$ et engendré à partir d'un sixième signal électrique $q_d$, représentatif d'une valeur désirée pour la vitesse de tangage q.

**3.** Système selon l'une des revendications 1 ou 2,
**caractérisé en ce que** ledit premier dispositif constitutif (13) détermine, en plus dudit deuxième signal électrique $\alpha_c$ et dudit troisième signal électrique $\theta_c$, un septième signal électrique $q_c$, représentatif de la valeur commandée correspondante de la vitesse de tangage q, et **en ce que** lesdits premiers moyens de commutation sont aptes à transmettre ledit septième signal électrique $q_c$ audit second dispositif constitutif (17).

**4.** Système selon la revendication 3,
**caractérisé en ce que** ledit premier dispositif constitutif (13) délivre, pour le septième signal électrique $q_c$, une valeur approximative égale à celle dudit premier signal électrique $\dot{\gamma}_c$.

**5.** Système selon l'une des revendications 2 à 4,
**caractérisé en ce qu'**il comporte :

- un pilote automatique (1) apte à délivrer un signal de facteur de charge commandé $nz_c$ ;
- un organe de pilotage manuel (2) apte à délivrer, par commutation, soit un signal de facteur de charge commandé $nz_c$, soit ledit sixième signal électrique $q_d$, représentatif d'une valeur désirée pour la vitesse de tangage q ; et
- des seconds moyens de commutation (21, 23) pour :

. transmettre audit premier dispositif constitutif (13) soit le signal de facteur de charge commandé délivré par ledit pilote automatique, soit le signal de facteur de charge commandé délivré par ledit organe de pilotage manuel ;
. ou bien transmettre ledit sixième signal électrique $q_d$ à des premiers moyens d'intégration (6) aptes à former le quatrième signal électrique $\theta_d$, représentatif d'une valeur désirée pour l'assiette $\theta$,

lesdits premiers moyens de commutation (25, 26) étant aptes à transmettre audit second dispositif constitutif (17) lesdits quatrième et sixième signaux électriques $\theta_d$ et $q_d$, en lieu et place desdits troisième et septième signaux électriques $\theta_c$ et $q_c$ engendrés par ledit premier dispositif constitutif.

**6.** Système selon l'une des revendications 1 à 5,
**caractérisé en ce que**, pour déterminer ledit deuxième signal électrique $\alpha_c$ à partir du premier signal $\dot{\gamma}_c$, ledit premier dispositif constitutif comporte des deuxièmes moyens de calcul (31) calculant l'expression

$$\alpha_c = \left(\dot{\gamma}_c - F_\gamma\right) / G_\gamma$$

dans laquelle $F_\gamma$ et $G_\gamma$ sont des fonctions de l'état de l'aéronef avec

$$F_\gamma = \frac{g.\cos(\gamma)}{V} + \frac{1}{2}.\frac{\rho}{m}.V.S.Cz_{\alpha=0}$$

et

$$G_\gamma = \frac{1}{2}.\frac{\rho}{m}.V.S.\left.\frac{\partial Cz}{\partial \alpha}\right|_{\alpha=0} + \frac{T}{m.V}$$

où g est l'accélération de la pesanteur, $\gamma$ la pente aérodynamique, V la vitesse de l'aéronef, $\rho$ la masse volumique de l'air, m la masse de l'aéronef, S la surface de référence de l'aéronef, $Cz_{\alpha=0}$ le coefficient de portance de l'aéronef pour une incidence nulle, $\left.\frac{\partial Cz}{\partial \alpha}\right|_{\alpha=0}$ e gradient du coefficient aérodynamique de portance en fonction de l'incidence et T la poussée de l'aéronef.

**7.** Système selon l'une des revendications 3 à 6,
**caractérisé en ce que** ledit premier dispositif constitutif comporte des seconds moyens intégrateurs (38) aptes à intégrer ledit septième signal électrique $q_c$ et un premier sommateur (39) pour former la somme de l'intégrale délivrée par lesdits seconds moyens intégrateurs (38) et dudit deuxième signal électrique $\alpha_c$, afin de former ledit troisième signal électrique $\theta_c$.

**8.** Système selon l'une des revendications 5 à 7,
**caractérisé en ce que** ledit second dispositif constitutif (17), soit à partir dudit troisième signal électrique $\theta_c$ et du septième signal électrique $q_c$ provenant dudit premier dispositif constitutif (13), soit à partir dudit quatrième signal $\theta_d$ et dudit sixième signal $q_d$ provenant dudit organe de pilotage manuel, ainsi que des valeurs actuelles $q_r$ et $\theta_r$ de la vitesse de tangage q et de l'assiette longitudinale $\theta$, détermine un huitième signal électrique $\dot{q}_c$, représentatif de

la valeur commandée correspondante de l'accélération de tangage $\dot{q}$, puis, à partir de ce huitième signal électrique $\dot{q}_c$, ledit second dispositif constitutif détermine ledit cinquième signal électrique $\delta_{mc}$.

**9.** Système selon la revendication 8,
**caractérisé en ce que** ledit second dispositif constitutif calcule ledit huitième signal électrique $\dot{q}_c$ par la relation

$$\dot{q}_c = K1.\theta_v - K2.\theta_r + K3.q_v - K4.q_r$$

où $\theta_v$ est ledit troisième ou quatrième signal électrique, $\theta_r$ la valeur actuelle de l'assiette longitudinale $\theta$, $q_v$ ledit sixième ou septième signal électrique, $q_r$ la valeur actuelle de la vitesse de tangage q, K1, K2, K3 et K4 étant des coefficients constants.

**10.** Système selon l'une des revendications 8 ou 9,
**caractérisé en ce que**, pour déterminer ledit cinquième signal électrique $\delta_{mc}$ à partir dudit huitième signal électrique $\dot{q}_c$, ledit second dispositif constitutif comporte des troisièmes moyens de calcul calculant l'expression

$$\delta_{mc} = (\dot{q}_c - F_q)/G_q$$

dans laquelle $F_q$ et $G_q$ sont des fonctions de l'état de l'aéronef avec

$$F_q = \frac{1}{I_y}.\frac{1}{2}.\rho.V^2.S.\ell.Cm_{\delta m=0} + \frac{1}{I_y}.T.b.\cos(\tau)$$

et

$$G_q = \frac{1}{I_y}.\frac{1}{2}.\rho.V^2.S.\ell.\left.\frac{\partial Cm}{\partial \delta m}\right|_{\delta m=0}$$

où $I_y$ est l'inertie de tangage, $\rho$ la masse volumique de l'air, V la vitesse de l'aéronef, S la surface de référence de l'aéronef, $\ell$ la longueur de référence de l'aéronef, $Cm_{\delta m=0}$ le coefficient de tangage, T la poussée, b le bras de levier des moteurs, $\tau$ l'angle de calage longitudinal des moteurs et $\left.\frac{\partial Cm}{\partial \delta m}\right|_{\delta m=0}$ l'efficacité des gouvernes de profondeur.

## Claims

**1.** An electric flight control system for the control in terms of load factor of the elevators (3) of an aircraft, said elevators being controlled by control means (4) compelling said elevators to take a deflection position dependent on an electrical signal $\delta_{mc}$ representative of the controlled value of the angle of deflection $\delta_m$ of said elevators (4), **characterized in that** it comprises

- first means of calculation for calculating, on the basis of an electrical signal nzc representative of a controlled value of said load factor, a first electrical signal $\dot{\gamma}c$ representative of the controlled value of the derivative, with respect to time, of the aerodynamic slope $\gamma$ of said aircraft;
- a first constituent device (13), which:

  · is able to receive at its input (14) said first electrical signal $\dot{\gamma}_c$;

· comprises first means of protection (30) able to maintain said first electrical signal $\dot{\gamma}_c$ between a minimum value and a maximum value;
· on the basis of said first electrical signal $\dot{\gamma}_c$, determines at least a second electrical signal $\alpha_c$, representative of the corresponding controlled value of the incidence $\alpha$, and a third electrical signal $\theta_c$, representative of the corresponding controlled value of the longitudinal attitude $\theta$;
· comprises second means of protection (33) able to maintain said second electrical-signal $\alpha_c$ between a minimum value and a maximum value; and
· delivers at least said third electrical signal $\theta_c$ to its output (15) ; and

- a second constituent device (17), which

. is able to receive at its input (18) at least said third electrical signal $\theta_c$ or a fourth electrical signal $\theta_d$ similar to said third electrical signal $\theta_c$;
. comprises third means of protection able to maintain said third or fourth electrical signal between a minimum value and a maximum value; and
. is able to deliver at its output (20) a fifth electrical signal which constitutes said signal $\delta_{mc}$, representative of the corresponding controlled value of the angle of deflection $\delta_m$ of said elevators (4).

**2.** The system as claimed in claim 1,
**characterized in that** it comprises first means of switching (25, 26) that can take:

- either a first position for which the output of said first constituent device is connected to the input of said second constituent device, so that said third electrical signal $\theta_c$ is then transmitted to said second constituent device;
- or a second position for which the input of said second device receives said fourth electrical signal $\theta_d$, similar to said third electrical signal $\theta_c$ and produced on the basis of a sixth electrical signal $q_d$, representative of a desired value for the rate of pitch q.

**3.** The system as claimed in one of claims 1 or 2,
**characterized in that** said first constituent device (13) determines, in addition to said second electrical signal $\alpha_c$ and said third electrical signal $\theta_c$, a seventh electrical signal $q_c$, representative of the corresponding controlled value of the rate of pitch q, and **in that** said first means of switching are able to transmit said seventh electrical signal $q_c$ to said second constituent device (17).

**4.** The system as claimed in claim 3,
**characterized in that** said first constituent device (13) delivers, for the seventh electrical signal $q_c$, a approximate value equal to that of said first electrical signal $\dot{\gamma}_c$.

**5.** The system as claimed in one of claims 2 to 4,
**characterized in that** it comprises:

- an automatic pilot (1) able to deliver a controlled load factor signal $nz_c$;
- a manual piloting member (2) able to deliver, by switching, either a controlled load factor signal $nz_c$ or said sixth electrical signal $q_d$, representative of a desired value for the rate of pitch q; and
- second means of switching (21, 23) for:

· transmitting to said first constituent device (13) either the controlled load factor signal delivered by said automatic pilot, or the controlled load factor signal delivered by said manual piloting member;
· or else transmitting said sixth electrical signal $q_d$ to first means of integration (6) able to form the fourth electrical signal $\theta_d$, representative of a desired value for the attitude $\theta$,

said first means of switching (25, 26) being able to transmit to said second constituent device (17) said fourth and sixth electrical signals $\theta_d$ and $q_d$, instead of said third and seventh electrical signals $\theta_c$ and $q_c$ produced by said first constituent device.

**6.** The system as claimed in one of claims 1 to 5,
**characterized in that**, to determine said second electrical signal $\alpha_c$ on the basis of the first signal $\dot{\gamma}_c$, said first constituent device comprises second means of calculation (31) calculating the expression

$$a_c = (\dot{\gamma}_c - F_\gamma)/G_\gamma$$

in which $F_\gamma$ and $G_\gamma$ are functions of the state of the aircraft with

$$F_\gamma = \frac{g.\cos(\gamma)}{V} + \frac{1}{2}\frac{\rho}{m}\cdot V\cdot S\cdot Cz_{\alpha=0}$$

and

$$G_\gamma = \frac{1}{2}\cdot\frac{\rho}{m}\cdot V\cdot S\cdot\left.\frac{\partial Cz}{\partial\alpha}\right|_{\alpha=0} + \frac{T}{m.V}$$

where g is the acceleration due to gravity, $\gamma$ the aerodynamic slope, V the speed of the aircraft, $\rho$ the density of the air, m the mass of the aircraft, S the reference area of the aircraft, $Cz_{\alpha=0}$ the coefficient of lift of the aircraft for a zero incidence, $\left.\frac{\partial Cz}{\partial\alpha}\right|_{\alpha=0}$ the gradient of the aerodynamic coefficient of lift as a function of the incidence and T the thrust of the aircraft.

7. The system as claimed in one of claims 3 to 6, **characterized in that** said first constituent device comprises second integrator means (38) able to integrate said seventh electrical signal $q_c$ and a first summator (39) for forming the sum of the integral delivered by said second integrator means (38) and of said second electrical signal $\alpha_c$, so as to form said third electrical signal $\theta_c$.

8. The system as claimed in one of claims 5 to 7, **characterized in that** said second constituent device (17), either on the basis of said third electrical signal $\theta_c$ and of the seventh electrical signal $q_c$ originating from said first constituent device (13), or on the basis of said fourth signal $\theta_d$ and of said sixth signal $q_d$ originating from said manual piloting member, as well as current values $q_r$ and $\theta_r$ of the rate of pitch q and of the longitudinal attitude $\theta$, determines an eighth electrical signal $\dot{q}_c$, presentative of the corresponding controlled value of the pitch acceleration $\dot{q}$, then, on the basis of this eighth electrical signal $\dot{q}_c$, said second constituent device determines said fifth electrical signal $\delta_{mc}$.

9. The system as claimed in claim 8, **characterized in that** said second constituent device calculates said eighth electrical signal $\dot{q}_c$ through the relation

$$\dot{q}_c = K1.\theta_v - K2.\theta_r + K3.q_v - K4.q_r$$

where $\theta_v$ is said third or fourth electrical signal, $\theta_r$ the current value of the longitudinal attitude $\theta$, $q_v$ said sixth or seventh electrical signal, $q_r$ the current value of the rate of pitch q, K1, K2, K3 and K4 being constant coefficients.

10. The system as claimed in one of claims 8 or 9, **characterized in that**, to determine said fifth electrical signal $\delta_{mc}$ on the basis- of said eighth electrical signal $\dot{q}_c$, said second constituent device comprises third means of calculation calculating the expression

$$\delta_{mc} = (\dot{q}_c - F_q)/G_q.$$

in which $F_q$ and $G_q$ are functions of the state of the aircraft with

$$F_q = \frac{1}{I_y} \cdot \frac{1}{2} \cdot \rho \cdot v^2 \cdot S \cdot \ell \cdot Cm_{\delta m=0} + \frac{1}{I_y} \cdot T \cdot b \cdot \cos(\tau)$$

and

$$G_q = \frac{1}{I_y} \cdot \frac{1}{2} \cdot \rho \cdot v^2 \cdot S \cdot \ell \cdot \left.\frac{\partial Cm}{\partial \delta m}\right|_{\delta m=0}$$

where $I_y$ is the pitch inertia, ρ the density of the air, V the speed of the aircraft, S the reference area of the aircraft, $\ell$ the reference length of the aircraft, $Cm_{\delta m=0}$ the coefficient of pitch, T the thrust, b the lever arm of the engines, τ the angle of longitudinal trim of the engines and $\left.\frac{\partial Cm}{\partial \delta m}\right|_{\delta m=0}$ the effectiveness of the elevators.

**Patentansprüche**

**1.** Elektrischer Flugregler zur Steuerung der Höhenruder (3) eines Flugzeugs bezüglich des Lastvielfachen, wobei die Höhenruder durch Steuermittel (4) gesteuert werden, die erzwingen, dass die Höhenruder eine Ausschlagposition einnehmen in Abhängigkeit eines elektrischen Signals $\delta_{mc}$, das für den eingestellten Wert des Ausschlagwinkels $\delta_m$ der Höhenruder (4) repräsentativ ist,
**dadurch gekennzeichnet, dass** er umfasst:

- erste Berechnungsmittel, um ausgehend von einem elektrischen Signal nzc, das repräsentativ für einen eingestellten Wert des Lastvielfachen ist, ein erstes elektrisches Signal $\dot{\gamma}_c$, zu berechnen, das repräsentativ ist für den eingestellten Wert der Ableitung nach der Zeit der aerodynamischen Steigung γ des Flugzeugs;
- eine erste konstitutive Vorrichtung (13), die:

  ■ geeignet ist, an ihrem Eingang (14) das erste elektrische Signal $\dot{\gamma}_c$ zu empfangen;
  ■ erste Schutzmittel (30) umfasst, die geeignet sind, das erste elektrische Signal $\dot{\gamma}_c$ zwischen einem Mindestwert und einem Maximalwert zu halten;
  ■ ausgehend von dem ersten elektrischen Signal $\dot{\gamma}_c$ mindestens ein zweites elektrisches Signal $\alpha_c$ bestimmt, das für den entsprechenden eingestellten Wert des Anstellwinkels α repräsentativ ist und ein drittes elektrisches Signal $\theta_c$, das für den entsprechenden eingestellten Wert der Längstrimmung θ repräsentativ ist;
  ■ zweite Schutzmittel (33) umfasst, die geeignet sind, das zweite elektrische Signal $\alpha_c$ zwischen einem Mindestwert und einem Maximalwert zu halten; und
  ■ mindestens das dritte elektrische Signal $\theta_c$ an ihrem Ausgang (15) abgibt; und

- eine zweite konstitutive Vorrichtung (17), die:

  ■ geeignet ist, an ihrem Eingang (18) mindestens das dritte elektrische Signal $\theta_c$ oder ein viertes elektrisches Signal $\theta_d$, das dem dritten elektrischen Signal $\theta_c$ ähnlich ist, zu empfangen;
  ■ dritte Schutzmittel umfasst, die geeignet sind, das dritte oder vierte elektrische Signal zwischen einem Mindestwert und einem Maximalwert zu halten; und
  ■ geeignet ist, an ihrem Ausgang (20) ein fünftes elektronisches Signal abzugeben, welches das Signal $\delta_{mc}$ bildet, das für den entsprechenden eingestellten Wert des Ausschlagwinkels $\delta_m$ der Höhenruder (4) repräsentativ ist.

**2.** System nach Anspruch 1,
**dadurch gekennzeichnet, dass** es erste Schaltmittel (25, 26) umfasst, die:

- entweder eine erste Position einnehmen können, bei welcher der Ausgang der ersten konstitutiven Vorrichtung

so mit dem Eingang der zweiten konstitutiven Vorrichtung verbunden ist, dass das dritte elektrische Signal $\theta_c$ dann an die zweite konstitutive Vorrichtung übertragen werden kann.
- oder eine zweite Position, bei welcher der Eingang der zweiten Vorrichtung das vierte elektrische Signal $\theta_d$ empfängt, das dem dritten elektrischen Signal $\theta_c$ ähnlich ist, und aus einem sechsten elektrischen Signal $q_d$ erzeugt wurde, das für einen gewünschten Wert der Nickgeschwindigkeit q repräsentativ ist.

**3.** System nach Anspruch 1 oder 2,
**dadurch gekennzeichnet, dass** die erste konstitutive Vorrichtung (13) zusätzlich zu dem zweiten elektrischen Signal $\alpha_c$ und dem dritten elektrischen Signal $\theta_c$ ein siebtes elektrisches Signal $q_c$ bestimmt, das für den entsprechenden eingestellten Wert der Nickgeschwindigkeit q repräsentativ ist, und **dadurch**, dass die ersten Schaltmittel geeignet sind, das siebte elektrische Signal $q_c$ an die zweite konstitutive Vorrichtung (17) zu übertragen.

**4.** System nach Anspruch 3,
**dadurch gekennzeichnet, dass** die erste konstitutive Vorrichtung (13) für das siebte elektrische Signal $q_c$ einen Schätzwert abgibt, der gleich dem des ersten elektrischen Signals $\dot{\gamma}_c$ ist.

**5.** System nach einem der Ansprüche 2 bis 4,
**dadurch gekennzeichnet, dass** es umfasst:

- einen Autopiloten (1) der geeignet ist, ein eingestelltes Signal des Lastvielfachen $nz_c$ abzugeben;
- ein manuelles Steuerungsorgan (2), das geeignet ist, durch Umschalten entweder ein eingestelltes Signal des Lastvielfachen $nz_c$ oder das sechste elektrische Signal $q_d$, das für einen Sollwert der Nickgeschwindigkeit q repräsentativ ist, abzugeben; und
- zweite Schaltmittel (21, 23) um:

  ■ das eingestellte Signals des Lastvielfachen, das von dem Autopiloten geliefert wird, oder das eingestellte Signal des Lastvielfachen, das von dem manuellen Steuerungsorgan geliefert wird, an die erste konstitutive Vorrichtung (13) zu übertragen, oder
  ■ das sechste elektrische Signal $q_d$ an erste Integrationsmittel (6) zu übertragen, die geeignet sind, das vierte elektrische Signal $\theta_d$ zu bilden, das für die Trimmung $\theta$ repräsentativ ist,

wobei die ersten Schaltmittel (25, 26) geeignet sind, das vierte und sechste elektrische Signal $\theta_d$ und $q_d$ anstelle des von der ersten konstitutiven Vorrichtung erzeugten dritten und siebten elektrischen Signals $\theta_c$ und $q_c$ an die zweite konstitutive Vorrichtung (17) zu übertragen.

**6.** System nach einem der Ansprüche 1 bis 5,
**dadurch gekennzeichnet, dass** die erste konstitutive Vorrichtung zum Bestimmen des zweiten elektrischen Signals $\alpha_c$ aus dem ersten Signal $\dot{\gamma}_c$ zweite Berechnungsmittel (31) umfasst, die den Ausdruck berechnen

$$\alpha_c = (\dot{\gamma}_c - F_\gamma)/G_\gamma$$

in welchem $F_\gamma$ und $G_\gamma$ Funktionen des Flugzeugzustands sind, mit

$$F_\gamma = \frac{g.\cos(\gamma)}{V} + \frac{1}{2}.\frac{\rho}{m}.V.S.Cz_{\alpha=0}$$

und

$$G_\gamma = \frac{1}{2}.\frac{\rho}{m}.V.S.\left.\frac{\partial Cz}{\partial \alpha}\right|_{\alpha=0} + \frac{T}{m.V}$$

wobei g die Erdbeschleunigung, $\gamma$ die aerodynamische Steigung, V die Geschwindigkeit des Flugzeugs, $\rho$ die Luftdichte, m die Masse des Flugzeugs, S die Referenzfläche des Flugzeugs, $Cz_{\alpha=0}$ der Auftriebskoeffizient des Flugzeugs bei einem Anstellwinkel von null, $\left.\frac{\partial Cz}{\partial \alpha}\right|_{\alpha=0}$ der Gradient des aerodynamischen Auftriebskoeffizienten in Abhängigkeit des Anstellwinkels und T der Schub des Flugzeugs ist.

**7.** System nach einem der Ansprüche 3 bis 6,
**dadurch gekennzeichnet, dass** die erste konstitutive Vorrichtung zweite Integrationsmittel (38) umfasst, die geeignet sind, das siebte elektrische Signal $q_c$ zu integrieren und einen ersten Summierer (39) zur Bildung der Summe des von den zweiten Integrationsmitteln (38) gelieferten Integrals und des zweiten elektrischen Signals $\alpha_c$, um das dritte elektrische Signal $\theta_c$ zu bilden.

**8.** System nach einem der Ansprüche 5 bis 7,
**dadurch gekennzeichnet, dass** die zweite konstitutive Vorrichtung (17) entweder ausgehend von dem dritten elektrischen Signal $\theta_c$ und dem siebten elektrischen Signal $q_c$ von der ersten konstitutiven Vorrichtung (13), oder ausgehend von dem vierten elektrischen Signal $\theta_d$ und dem sechsten elektrischen Signal $q_d$ von dem manuellen Steuerungsorgan, sowie von den aktuellen Werten $q_r$ und $\theta_r$ der Nickgeschwindigkeit q und der Längstrimmung $\theta$, ein achtes elektrisches Signal $q_c$ bestimmt, das für den entsprechenden eingestellten Wert der Nickbeschleunigung q repräsentativ ist, und dass diese zweite konstitutive Vorrichtung dann ausgehend von diesem achten elektrischen Signal $q_c$ das fünfte elektrische Signal $\delta_{mc}$ bestimmt.

**9.** System nach Anspruch 8, **dadurch gekennzeichnet,**
**dass** die zweite konstitutive Vorrichtung das achte elektrische Signal $q_c$ berechnet durch die Beziehung

$$\dot{q}_c = K1.\theta_v - K2.\theta_r + K3.q_v - K4.q_r$$

wobei $\theta_v$ das dritte oder vierte elektrische Signal, $\theta_r$ der aktuelle Wert der Längstrimmung $\theta$, $q_v$ das sechste oder siebte elektrische Signal, $q_r$ der aktuelle Wert der Nickgeschwindigkeit q, K1, K2, K3 und K4 konstante Koeffizienten sind.

**10.** System nach Anspruch 8 oder 9,
**dadurch gekennzeichnet, dass** die zweite konstitutive Vorrichtung zum Bestimmen des fünften elektrischen Signals $\delta_{mc}$ ausgehend von dem achten elektrischen Signal $q_c$ dritte Berechnungsmittel umfasst, die den folgenden Ausdruck berechnen

$$\delta_{mc} = (\dot{q}_c - F_q) / G_q$$

in welchem $F_q$ und $G_q$ Funktionen des Flugzeugzustands sind mit

$$F_q = \frac{1}{I_y} \cdot \frac{1}{2} . \rho . V^2 . S . \ell . Cm_{\delta m=0} + \frac{1}{I_y} . T . b . \cos(\tau)$$

und

$$G_q = \frac{1}{I_y} \cdot \frac{1}{2} . \rho . V^2 . S . \ell . \left.\frac{\partial Cm}{\partial \delta m}\right|_{\delta m=0}$$

wobei $I_y$ die Nickträgheit ist, $\rho$ die Luftdichte, V die Geschwindigkeit des Flugzeugs, S die Referenzfläche des

Flugzeugs, $\ell$ die Referenzlänge des Flugzeugs, $Cm_{\delta m=0}$ der Nickkoeffizient, T der Schub, b der Hebelarm der Motoren, $\tau$ der Längsanstellwinkel der Motoren und $\left.\frac{\partial Cm}{\partial \delta m}\right|_{\delta m=0}$ die Effizienz der Höhenruder ist.

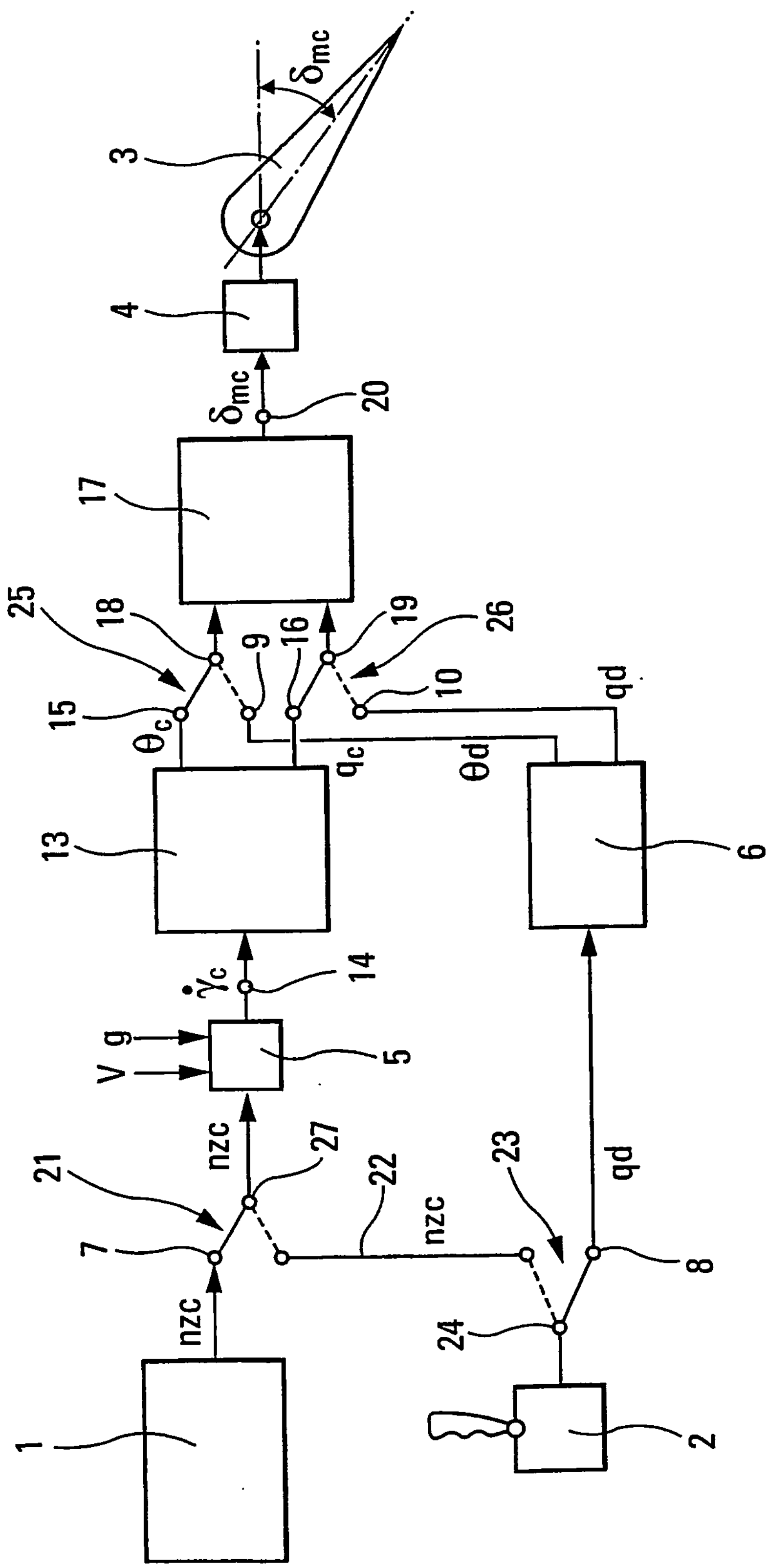

1
2
3
4
5
6
7
8
9
10
13
14
15
16
17
18
19
20
21
22
23
24
25
26
27
nzc
qd
V
g
$\dot{\gamma}_c$
$\theta_c$
$q_c$
$\theta d$
$\delta_{mc}$


Fig. 1

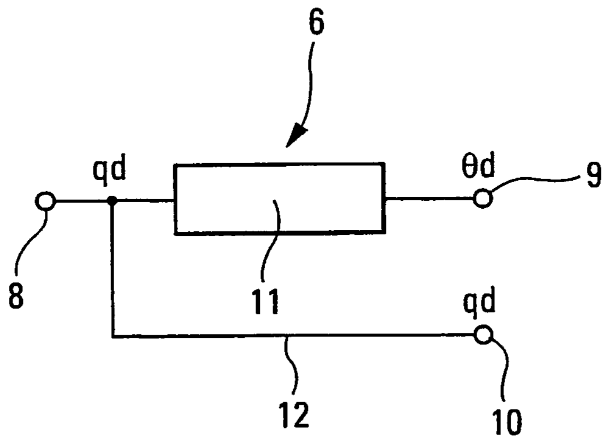


Fig. 2

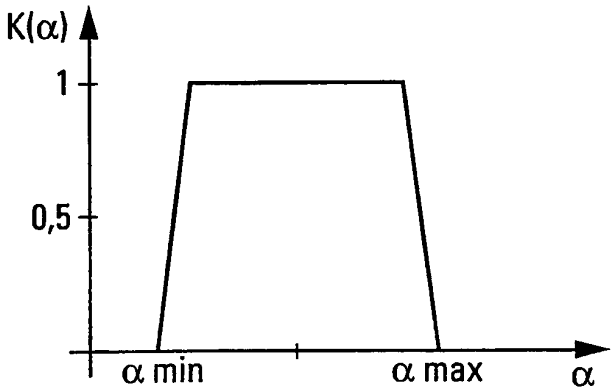


Fig. 4

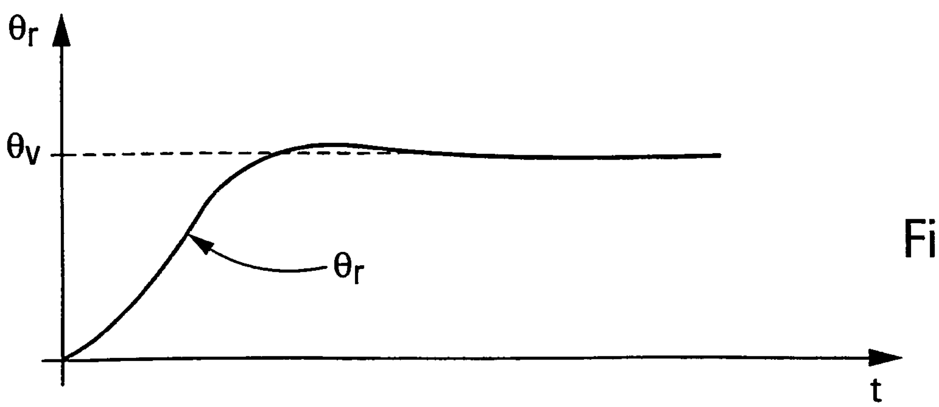


Fig. 6

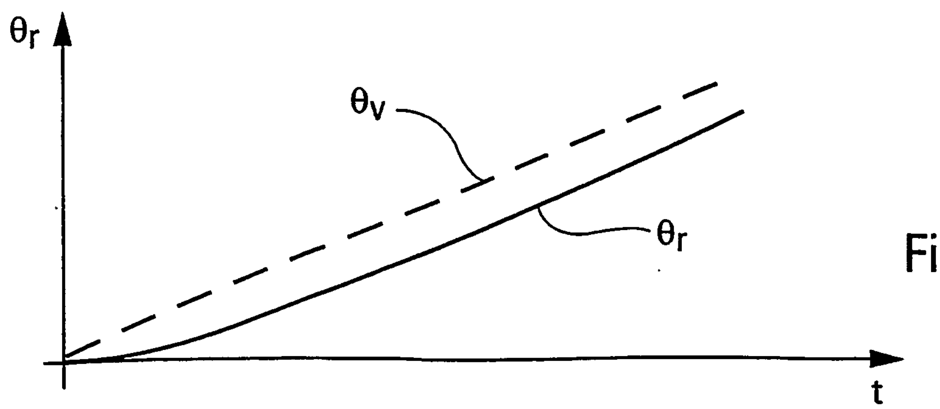


Fig. 7

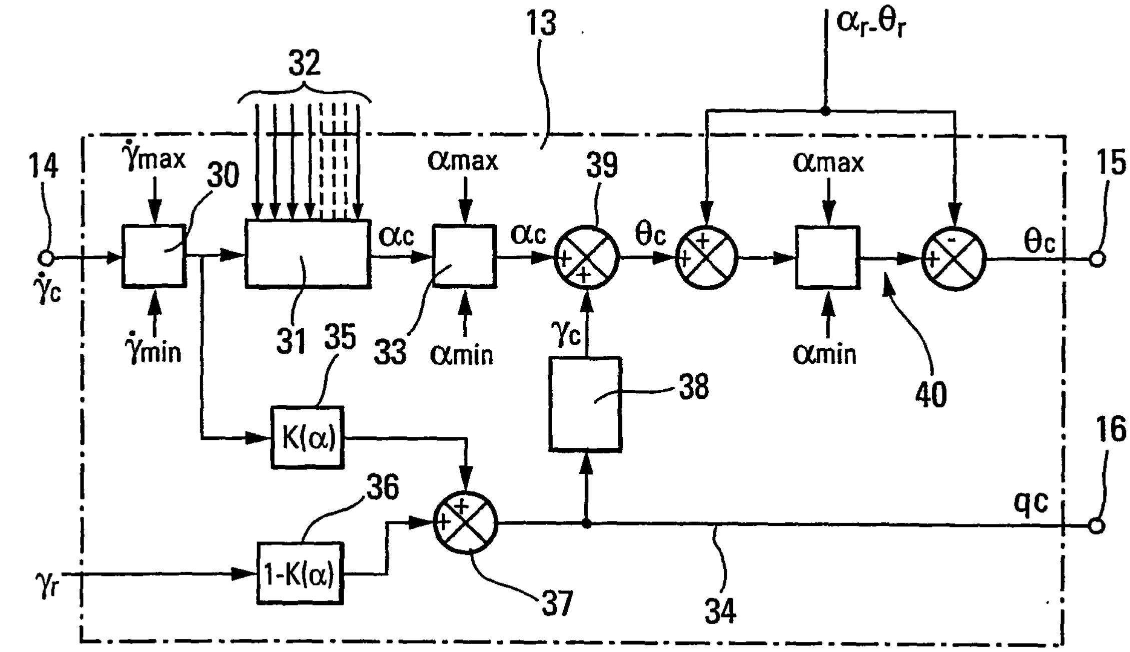
13
32
$\alpha_r$-$\theta_r$
14
$\dot{\gamma}$max
30
$\alpha$max
39
$\alpha$max
15
$\dot{\gamma}$c
$\alpha$c
$\alpha$c
$\theta$c
$\theta$c
31
35
33
$\alpha$min
$\gamma$c
$\dot{\gamma}$min
$\alpha$min
38
40
16
K($\alpha$)
36
qc
$\gamma$r
1-K($\alpha$)
37
34

Fig. 3

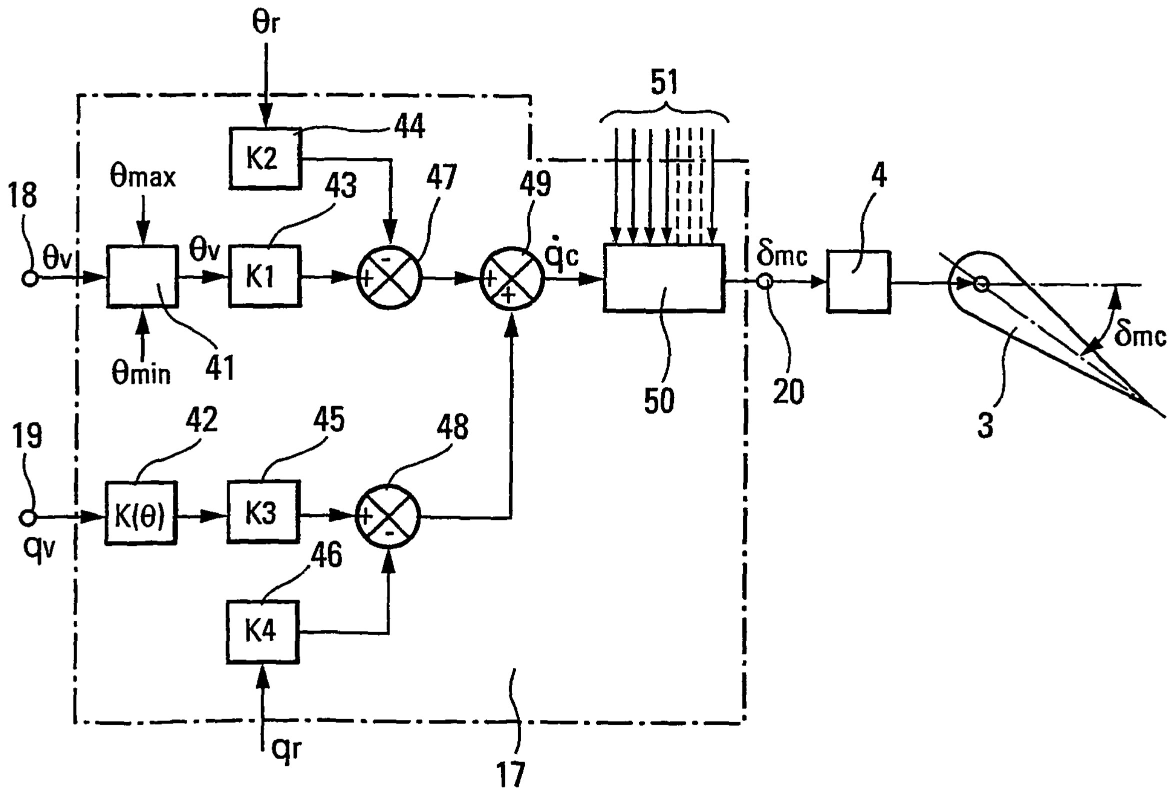
$\theta$r
51
44
K2
18
$\theta$max
43
47
49
4
$\theta$v
$\theta$v
K1
$\dot{q}$c
$\delta$mc
$\delta$mc
$\theta$min
41
50
20
3
19
42
45
48
K($\theta$)
K3
qv
46
K4
qr
17

Fig. 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- FR 2656585
- FR 2668750